# EUROPÄISCHE PATENTSCHRIFT

(11) **EP 2 898 773 B1**
(45) Veröffentlichungstag und Bekanntmachung des Hinweises auf die Patenterteilung: **25.09.2019**
(21) Anmeldenummer: 15151910.5
(22) Anmeldetag: 21.01.2015
(51) Int. Cl.: A01M 7/00

(54) **VERFAHREN ZUM GESTEUERTEN UND/ODER GEREGELTEN AUSBRINGEN VON PFLANZENSCHUTZMITTEL SOWIE LANDWIRTSCHAFTLICHE VERTEILMASCHINE ZUR ANWENDUNG DES VERFAHRENS**
METHOD FOR THE CONTROLLED AND/OR REGULATED DISPENSING OF PLANT PROTECTING AGENTS AND AGRICULTURAL DISTRIBUTOR FOR APPLICATION OF THE METHOD
PROCÉDÉ D'ÉPANDAGE CONTRÔLÉ ET/OU RÉGULÉ DE PRODUITS PHYTOSANITAIRES AINSI QU'ÉPANDEUR AGRICOLE POUR L'APPLICATION DU PROCÉDÉ

(30) Priorität: 24.01.2014 DE 102014100829
(43) Veröffentlichungstag der Anmeldung: 29.07.2015
(73) Patentinhaber: HORSCH LEEB Application Systems GmbH, 94562 Oberpöring (DE)
(72) Erfinder: Leeb, Theodor, 94562 Oberpöring (DE)
(74) Vertreter: Benninger, Johannes

(56) Entgegenhaltungen:
- CA-A1- 2 544 355
- DE-A1-102011 054 019
- JP-A- 2002 243 661
- US-A- 5 734 167
- SALYANI M ET AL: "DEVELOPMENT OF A SENSOR FOR SPRAY DEPOSITION ASSESSMENT", TRANSACTIONS OF THE AMERICAN SOCIETY OF AGRICULTURAL ENGINEERS, AMERICAN SOCIETY OF AGRICULTURAL ENGINEERS. ST.JOSEPH, MI, US, Bd. 33, Nr. 5, 1. September 1990 (1990-09-01), Seiten 1464-1468, XP000174769, ISSN: 0001-2351

## Beschreibung

Die vorliegende Erfindung betrifft ein Verfahren zum gezielten Ausbringen von flüssigen Pflanzenschutz- und/oder Düngemittel, mittels einer landwirtschaftlichen Verteilmaschine, insbesondere in Form einer Feldspritze mit den Merkmalen des unabhängigen Verfahrensanspruchs 1. Die Erfindung betrifft zudem eine landwirtschaftliche Verteilmaschine für das Ausbringen von flüssigem Pflanzenschutz- und/oder Düngemittel, insbesondere eine selbstfahrende oder mit einem landwirtschaftlichen Zugfahrzeug gekoppelte Feldspritze, welche die Merkmale des unabhängigen Anspruchs 5 aufweist.

Landwirtschaftliche Feldspritzen werden zum Ausbringen bzw. zur Applikation von flüssigem Pflanzenschutz- und/oder Düngemittel verwendet. Derartige Feldspritzen mit einem quer zur Fahrtrichtung stehenden Verteil- oder Spritzgestänge sind in unterschiedlichen Ausführungsvarianten bekannt, so bspw. als selbstfahrende oder mittels eines Zugfahrzeuges gezogene oder an diesem anhängte Feldspritzen.

Vorrangige Aufgabe aller bekannten Feldspritzen ist es, ein definiertes Flüssigkeitsvolumen an Pflanzenschutzmittel, Pestiziden oder Düngemittel auf einem Pflanzenbestand auszubringen, wobei das Verteilen des Flüssigkeitsvolumens möglichst in Abhängigkeit von bzw. im Zusammenhang mit dem jeweils auszubringenden Mittel erfolgen soll. So sollen gewisse Mittel bspw. überwiegend die Ähren der Pflanzen erreichen, wogegen andere Mittel überwiegend die Blätter und/oder die Stängel der Pflanzen erreichen sollen. Die Wirkung der diversen Mittel ist jeweils von der Konzentration und der Benetzung dieser, d.h. der Menge der an den Pflanzen vorhanden oder aufgebrachten Mittel, abhängig. Dies ist zum einen von wirtschaftlich entscheidender Bedeutung, da durch den gezielten Einsatz der Pflanzenschutzmittel nur an den Positionen des Pflanzenbestandes, für die dieses auch vorgesehen ist, ein großes Einsparpotenzial besteht. Zudem werden durch den gezielten Einsatz der Ressourcen auch umweltschonende Maßnahmen begünstigt.

Um ein möglichst gezieltes Ausbringen der jeweiligen Applikationsflüssigkeit zu erreichen, sind aus dem Stand der Technik verschiedene Lösungsansätze bekannt. So sind Systeme bekannt, bei denen mittels einer Auswertung der vorhandenen Biomasse auf die Dichte des vorhandenen Pflanzenbestandes geschlossen werden kann und die Ausbringmenge entsprechend angepasst wird. Ein derartiges System ist bspw. durch die DE 10 2011 054 742 A1 bekannt geworden. Bei diesem bekannten Verfahren wird die mit Spritzmittel zu beaufschlagende Biomasse des Pflanzenbestandes mittels Ultraschallsensoren zyklisch erfasst und bestimmt, wonach die solchermaßen bestimmte Biomasse als Regelgröße für die Menge an ausgebrachter Substanz verwendet wird.

Darüber hinaus sind weitere Systeme bekannt, um eine möglichst große Belagsbildung an den gewünschten Positionen der Pflanze zu erzielen. So besteht ein Problem während der Applikation in der sog. Abdrift, d.h. durch Wind und Fahrtbewegungen der Feldspritze wird ein Teil der Flüssigkeit verweht und gelangt nicht mehr oder nur zum Teil auf den Pflanzenbestand oder der gewünschten Position der Pflanzen. Um dies zu verbessern, ist z.B. aus der DE 10 2007 036 870 A1 ein System bekannt, bei dem u.a. in Abhängigkeit der Fahrtgeschwindigkeit der Feldspritze, der Windgeschwindigkeit und der Austrittgeschwindigkeit der Flüssigkeit aus einer sog. Spritz- oder Verteilerdüse der Winkel dieser Düsen in Bezug auf die Pflanzen verändert wird, um somit ein gezielteres Verteilen der Spritzmittel zu gewährleisten.

Weitere Lösungsansätze sind u.a. das Verwenden von verschiedenen Spritzdüsen, um somit die Beschleunigung der Flüssigkeit zwischen Verteilergestänge und den Pflanzen zu beeinflussen oder um variable Tropfengrößen der Spritzflüssigkeit zu erzielen; man spricht hier von einer Anpassung des Flüssigkeits- oder Tropfenspektrum. Weiter spielt auch die Art der Pflanzen und der Taubedeckungsgrad, den diese aufweisen, eine Rolle beim Anhaften bzw. Benetzen der Pflanzen mit Spritzflüssigkeit. Ein System, mit dem dies verbessert werden soll, bzw. ein System, bei dem der Spritzvorgang entsprechend dieser Eigenschaften verbessert werden soll, beschreibt die DE 10 2011 054 019 A1.

Eine Sensoreinrichtung zur Erfassung des Benetzungsgrades von Pflanzen mit Pflanzenschutzmittel ist zudem aus der CA 2 544 355 A1 bekannt.

Hierdurch sind aus dem Stand der Technik bereits zahlreiche Lösungsansätze bekannt, um ein gezieltes Einsetzen von Pflanzenschutzmittel auf einem Pflanzenbestand zu erreichen. Hierzu werden an den Feldspritzen verschiedenste Ausbringeigenschaften verändert; so werden bspw. verschiedene Spritzdüsen eingesetzt, oder die Menge an Applikationsflüssigkeit wird angepasst, oder der Winkel der Spritzdüsen in Bezug auf den Pflanzenbestand wird variiert. Darüber hinaus sind durchaus noch weitere Einstellungen vorstellbar, wobei diese Ausbringeigenschaften bzw. Einstellmöglichkeiten auch als sog. Ausbringparameter bezeichnet werden können.

Das Ziel bleibt jedoch, anhand von diversen Ausbringparameter die Applikation so anzupassen, dass vorzugsweise möglichst die Bereiche der Pflanze besprüht werden, für die das Pflanzenschutzmittel auch vorgesehen ist, also bspw. überwiegend die Blätter, jedoch nicht die Ähre oder umgekehrt, um somit jeweils eine weitestgehend optimale Ressourcenverwertung der Pflanzenschutz- und/oder Düngemittel sicher zu stellen.

Allen aus dem Stand der Technik bekannten Systemen gemeinsam ist, dass diese jeweils keine Angaben über die tatsächlich erreichte Benetzung nach bzw. während der Pflanzenschutzmaßnahme geben können. Das bedeutet, es gibt zwar Systeme, mittels derer sich das Ausbringen der Pflanzenschutzflüssigkeit variieren lässt, nur beruhen diese weitestgehend auf Vermutungen, dass die Benetzung verbessert werden müsste; konkrete Aussagen über die tatsächlich erreichte Benetzung kann kein System liefern. Somit liefert der bekannte Stand der Technik zwar eine verbesserte Anpassung der Ausbringmenge und auch eine verbesserte Anpassung bspw. der Abdrift, nur bleibt nach wie vor offen, ob die Benetzung einer gewünschten Sollbenetzung entspricht.

Der vorliegenden Erfindung liegt somit die Aufgabe zu Grunde, auf Basis der Ermittlung einer tatsächlichen, während bzw. durch die Applikation erreichten Benetzung des Pflanzenbestandes ein Verfahren zum gezielten Ausbringen von Pflanzenschutzmitteln bereitzustellen.

Diese Aufgabe der Erfindung wird mit dem Gegenstand des unabhängigen Verfahrensanspruch 1 erreicht. Merkmale vorteilhafter Weiterbildungen der Erfindung ergeben sich aus den abhängigen Ansprüchen. Infolge dieser Maßnahmen wird aufgrund von wenigstens einem, den Spritzdüsen bzw. den Verteilvorrichtungen nachgeordneten Überwachungsmittel die tatsächlich erreichte Benetzung der Pflanzenschutzmaßnahme ermittelt und anhand dieser Werte die Ausbringparameter der Feldspritze angeglichen, wodurch eine gezielte Ausbringung der Pflanzenschutzmittel ermöglicht wird.

Die Erfindung bezieht sich auf eine landwirtschaftliche Verteilmaschine, insbesondere eine Feldspritze, zum Ausbringen von flüssigem Pflanzenschutzmittel wie Dünger- und/oder Pestiziden oder dergl. Die Feldspritze kann als selbstfahrende oder als eine an einem Zugfahrzeug angebrachte bzw. angehängte Maschine ausgebildet sein. Die Feldspritze besteht im Wesentlichen aus einem Spritzgestänge, welches um wenigstens eine in Fahrtrichtung verlaufende Achse pendelnd oder drehend aufgehängt ist, sowie einer Vielzahl von über die Arbeitsbreite verteilten Spritzdüsen zum Ausbringen bzw. flächigen Verteilen der Applikationsflüssigkeit. Die Flüssigkeiten werden von wenigstens einem Vorratsbehälter bereitgestellt und von einer Förderpumpe zu den Spritzdüsen befördert. Darüber hinaus ist der Feldspritze ein Rechnersystem zugeordnet, mittels dem die Feldspritze sowie der Ausbringvorgang der Flüssigkeit gesteuert und geregelt werden können.

Dem Spritzgestänge und den daran angebrachten Spritzdüsen bzw. Verteilereinheiten ist wenigstens ein Überwachungsmittel nachgeordnet. Dieses ist so konzipiert, dass es die durch die Spritzdüsen ausgebrachte Flüssigkeit bzw. deren Flüssigkeitstropfen auf den zu behandelnden Pflanzen erkennt. Somit erfolgt eine Auswertung, wo - also, in welchen Bereichen - die Pflanzen benetzt wurden, wie stark, also wie gleichmäßig, die Pflanzen benetzt wurden und mit welchem Tropfenspektrum, also mit welcher Tropfengröße, die Pflanzen benetzt wurden. Die somit ermittelte tatsächlich vorhandene Benetzung der Pflanzen wird an das Rechnersystem übermittelt. Im Rechnersystem wird dann, auf Basis von in diesem hinterlegten Sollwerten der Benetzung, eine Istwert - Sollwert Analyse durchgeführt und anschließend die Ausbringparameter der Feldspritze entsprechend angepasst, bzw. nachgeregelt.

Der Ausbringvorgang lässt sich in folgende Schritte bzw. in folgende Verfahrensschritte unterteilen. Zunächst werden in das Rechnersystem verschiedene Sollwerte eingegeben oder auch eingelesen bzw. eine Kombination der Sollwertgenerierung aus Einlesen und Eingabe. Das Einlesen kann bspw. von einem Kennfeld oder einer Vielzahl von Kennfeldern erfolgen. Diese Sollwerte umfassen Angaben, wie die Pflanzenschutzmaßnahme erfolgen sollte; d.h. hier werden u. a. Angaben über die auszubringende Flüssigkeit, und die auszubringende Menge eingegeben. Darüber hinaus umfassen die Sollwerteingabe bzw. das Einlesen von Sollwerten die Eingabe/Einlesung der Daten, in welchem Bereich der Pflanze bspw. welche Benetzung erreicht werden sollte, d.h. abhängig von der Art der auszubringenden Flüssigkeit wird eingegeben, welcher Bereich der Pflanze wie stark benetzt werden soll. Die Eingabe kann auf vielfältige Weise erfolgen, so kann diese manuell durch einen Bediener erfolgen. Auch können im Rechnersystem bereits Daten hinterlegt sein welche durch Eingabe durch den Wirkstoff automatisch eingelesen werden. Auch wäre es vorstellbar, dass das Rechnersystem mit einer Datenbank, bspw. eines Pflanzenschutzmittel Herstellers in Verbindung steht und die gewünschten Daten nach Eingabe des Mittels von dieser Datenbank abgerufen werden.

Nach erfolgter Sollwerteingabe führt das Rechnersystem eine Anpassung bzw. eine Änderung der Ausbringparameter durch, wobei diese Ausbringparameter eine Vielzahl von verschiedensten Instrumenten der Feldspritze umfassen können. So kann bspw. die Ausbringmenge variieren. Darüber hinaus können die Spritzdüsen verschieden ausgestaltet sein. In einer bevorzugten Ausführungsform sind bspw. verschiedene Spritzdüsen zu einem sog. Düsenstock zusammengefasst, wobei wiederum die einzelnen Düsen hierbei verschiedene Eigenschaften aufweisen. So sind Spritzdüsen bekannt, welche ein sehr feines, nebelartiges Tropfenspektrum der Pflanzenschutzflüssigkeit erzeugen. Demgegenüber sind Spritzdüsen bekannt, welche ein sehr grobes Tropfenspektrum erzeugen. Weiter kann je nach Spritzdüse die Geschwindigkeit, mit der die Flüssigkeit in Richtung der Pflanzen beschleunigt wird, variiert werden, wobei sich somit bspw. auch die Eindringtiefe der Flüssigkeit in den Pflanzenbestand ändern bzw. angleichen lässt. Weiter kann die Winkelposition der Spritzdüsen in Bezug auf den Pflanzenbestand geändert werden. Generell können verschiedenste Parameter verstellt werden und in Abhängigkeit dieser jeweils die Benetzung und die Position im Pflanzenbestand in dem die Benetzung stattfindet, beeinflusst werden.

Bei der Variation der Ausbringparameter werden insbesondere die Sollwerte berücksichtigt, die den Benetzungsgrad zumindest beeinflussen bzw. damit in engem Zusammenhang stehen. Darüber hinaus können weitere Daten zur Beeinflussung der Ausbringparameter verarbeitet werden, bspw. Sensordaten verschiedener Sensoren, die an der Verteilmaschine angeordnet sind und bspw. Daten über eine Windrichtung, eine Windgeschwindigkeit, eine Umgebungstemperatur, eine Luftfeuchtigkeit, eine Umgebungshelligkeit etc. liefern können. Viele solcher Sensordaten können sowohl den Spritzvorgang als auch die Datengüte des optischen Sensors beeinflussen, der den Benetzungsgrad der mit Pflanzenschutz- oder Düngemittel beaufschlagten Pflanzen erfassen und die erfassten Daten an die Rechnereinheit liefern soll.

In Abhängigkeit der Ausbringparameter bzw. in Abhängigkeit der ausgewählten Spritzdüsen und Spritzdüsenwinkel erfolgt im nächsten Schritt die Verteilung der Pflanzenschutzflüssigkeit über den Pflanzenbestand.

Nach dem gleichmäßigen Verteilen der Flüssigkeit erfolgt wiederum im nächsten Schritt das Anhaften dieser auf dem zu behandelnden Pflanzenbestand. Dieser Vorgang der sog. Belagsbildung wird auch Benetzung bezeichnet. Wobei diese Benetzung in Abhängigkeit der Ausbringparameter möglichst an den gewünschten Positionen des Pflanzenbestandes und in der gewünschten Menge an diesen Positionen erfolgen soll.

Die Benetzung wird im nächsten Schritt mittels wenigstens einem dem Spritzgestänge nachgeordneten Überwachungsmittel erfasst. D.h. es wird ermittelt, wo und wie stark die Belagsbildung bzw. die Benetzung an den jeweiligen Positionen des Pflanzenbestandes ist. Nachgeordnet bedeutet in diesem Zusammenhang, dass die Überwachungsmittel bspw. in einem hinteren Bereich der Feldspritze angebracht sind, bzw. dass sie so angebracht sind, dass diese die Benetzung unmittelbar nach dem gleichmäßigen Verteilen der Flüssigkeit ermitteln und dass hierfür keine zusätzlichen Schritte oder Mittel erforderlich sind. Die Überwachungsmittel können vielfältig ausgeführt sein. Vorzugsweise werden als Überwachungsmittel Infrarotkameras verwendet. Diese können so eingesetzt werden, dass diese den Temperaturunterschied zwischen dem Pflanzenbestand und der auf dieser anhaftenden Pflanzenschutzflüssigkeit ermitteln und aufgrund dessen die tatsächlich vorhandene Benetzung des Pflanzenbestandes mit Pflanzenschutzmittel ausgewertet wird. Ebenso wäre eine optische Kontrolle vorstellbar, insofern der Pflanzenbestand und die Pflanzenschutzflüssigkeit unterschiedliche Spektralfarben aufweisen. Um diesen Effekt zu verstärken, könnte bspw. der Flüssigkeit ein zusätzlicher Farbstoff beigemischt werden. Neben den beschriebenen Möglichkeiten bzw. Überwachungsmitteln zur Ermittlung der tatsächlich erreichten Benetzung während des Pflanzenschutzvorgangs wären durchaus noch weitere Möglichkeiten vorstellbar.

Wiederum im nächsten Schritt wird anschließend im Rechnersystem eine Istwert-Sollwert-Analyse durchgeführt. Das bedeutet, dass die von dem wenigstens einen Überwachungsmittel erfasste tatsächlich vorhandene Benetzung mit der gewünschten Benetzung, welche als Sollwert im Rechnersystem hinterlegt ist, verglichen wird. In Abhängigkeit der Differenz dieser beiden Werte werden anschließend, ebenfalls wiederum mittels des Rechnersystems, die Ausbringparameter angepasst, wodurch das Verfahren erneut, als eine Wiederholungsschleife, gestartet wird. Dies geschieht solange bis das Verfahren bzw. der Verfahrensablauf schließlich beendet wird.

Mit Hilfe des erfindungsgemäßen Verfahrens wird eine geregelte Ausbringung von Pflanzenschutz- oder Düngeflüssigkeit auf einen Pflanzenbestand ermöglicht, wobei sich die Ausbringparameter und insbesondere die Menge an ausgebrachter und versprühter Flüssigkeit nach dem optisch erfassten Benetzungsgrad der Pflanzen mit Flüssigkeit richtet. Die permanente optische Erfassung dieses Benetzungsgrades mittels eines an der Verteilmaschine angeordneten Sensors ermöglicht die permanente Regelung und/oder Steuerung der Ausbringparameter während der Ausbringung der Flüssigkeit. Die Anpassung der Ausbringparameter kann wahlweise permanent, zyklisch und/oder intermittierend auf Basis einer Abweichung des erfassten Benetzungsgrades vom vorgegebenen Benetzungsgrad der Pflanzen des Pflanzenbestandes erfolgen.

Damit liegt der besondere Vorteil der vorliegenden Erfindung in der nahezu verzögerungsfreien Steuer- und Regelbarkeit des Spritzvorganges, bei dem die ausgebrachte Spritzmenge sowie weitere Ausbringparameter unmittelbar während des Ausbringvorganges auf Grundlage von Sensorwerten verändert, angepasst und optimiert werden können. Da sich die entsprechenden Sensoren in günstiger Höhe unmittelbar hinter den Spritzdüsen am selben Spritzgestänge befinden, kann auch der Benetzungsgrad und die Einwirkung des ausgebrachten Spritzmittels auf die Pflanzen erfasst werden, bevor größere Anteile des Spritzmittels verdunsten oder an den Pflanzen herabgetropft oder herabgelaufen sind.

Das erfindungsgemäße Verfahren zum gesteuerten Ausbringen von flüssigem Pflanzenschutz- und/oder Düngemittel mittels einer landwirtschaftlichen Verteilmaschine arbeitet insbesondere mit einer Feldspritze, die ein an der Verteilmaschine bzw. der Feldspritze angebrachtes Spritzgestänge umfasst. Die Pflanzenschutz- und/oder Düngeflüssigkeit wird während einer Feldfahrt der Verteilmaschine bzw. Feldspritze mittels wenigstens einer am Spritzgestänge angebrachten Spritzdüse über einen Pflanzenbestand verteilt. Normalerweise ist an dem Spritzgestänge jedoch eine Vielzahl von nebeneinander angeordneten Spritzdüsen vorgesehen. Beim Start des Pflanzenschutzprozess werden zunächst Sollwerten in ein Rechnersystem eingegeben oder eingelesen, was insbesondere der Vorgabe einer definierten Benetzung des Pflanzenbestandes durch Vorgabe von sinnvollen Startwerten dient. Beim eigentlichen Spritzvorgang können die Ausbringparameter an Spritzmittel durch die Vorgaben des Rechnersystems variiert werden, d.h. das Rechnersystem sorgt auf Grundlage seines Datenbestandes sowie der eingegebenen und/oder eingelesenen Sollwerte oder Basiswerte für eine gesteuerte Variation von Ausbringparametern für die Pflanzenschutz- und/oder Düngeflüssigkeit. Auf Basis der gesteuerten Ausbringparameter erfolgt dann die Verteilung der Pflanzenschutz- und/oder Düngeflüssigkeit über den Pflanzenbestand, wodurch die gewünschte Benetzung der Pflanzen des Pflanzenbestandes mit Pflanzenschutz- und/oder Düngeflüssigkeit bewirkt wird. Das erfindungsgemäße Verfahren sieht nun die permanente, zyklische und/oder intermittierende Erfassung eines Benetzungsgrades der Pflanzen des Pflanzenbestandes nach dem Verteilen des Pflanzenschutz- und/oder Düngemittels mittels wenigstens eines, dem Spritzgestänge nachgeordneten Überwachungsmittels vor, wobei das Überwachungsmittel, d.h. normalweise die Sensoren, an einem Ausleger oder an Auslegern des Spritzgestänges angeordnet sind, so dass sie in Fahrtrichtung nach hinten über das Spritzgestänge hinausragen. Die Sensoren bzw. die Überwachungsmittel ermöglichen den permanenten oder zyklischen Vergleich des mittels des Überwachungsmittels erfassten Benetzungsgrades der Pflanzen des Pflanzenbestandes durch das Rechnersystem mit dem auf Basis der Sollwerteingabe berechneten vorgegebenen Benetzungsgrad. Außerdem können auf Basis dieses Vergleichs permanent, zyklisch und/oder intermittierend die Ausbringparameter auf Basis einer Abweichung des erfassten Benetzungsgrades vom vorgegebenen Benetzungsgrad der Pflanzen des Pflanzenbestandes angepasst werden. Nach erfolgter Überfahrt oder nach Entleerung eines Vorratsbehälters kann der Pflanzenschutzprozess zunächst beendet oder auch nur unterbrochen werden.

Das Verfahren weist gegenüber bekannten Verfahren den besonderen Vorteil auf, dass das Überwachungsmittel bzw. die Sensoren die tatsächlich erreichte Benetzung der Pflanzen des Pflanzenbestandes ermittelt, wobei die vorrangig benetzten Bereiche des Pflanzenbestandes und/oder der Grad der Benetzung dieser vorrangig benetzten Bereiche des Pflanzenbestandes mit Pflanzenschutz- und/oder Düngemittel erfasst wird/werden. Das Überwachungsmittel kann die Pflanzen des Pflanzenbestandes bspw. optisch erfassen, insbesondere mittels einer Infrarotkamera. Außerdem kann vorgesehen sein, dass die veränderlichen Ausbringparameter durch eine Ausbringmenge je Zeiteinheit und/oder durch eine Winkellage der Spritzdüsen und/oder ein von den Spritzdüsen erzeugtes Tropfenspektrum und/oder durch eine von den einzelnen Spritzdüsen ausgebrachte Menge an Pflanzenschutz- und/oder Düngemittel gebildet werden.

Weiterhin liegt der vorliegenden Erfindung die Aufgabe zu Grunde, eine landwirtschaftliche Verteilmaschine zur Verfügung zu stellen, die in der Lage ist, auf Basis der Ermittlung einer tatsächlichen, während bzw. durch die Applikation erreichten Benetzung des Pflanzenbestandes die relevanten Ausbringparameter zu regeln. Zur Lösung dieser weiteren Aufgabe der Erfindung schlägt der unabhängige Anspruch 5 eine landwirtschaftliche Verteilmaschine für das Ausbringen von flüssigem Pflanzenschutz- und/oder Düngemittel vor, die insbesondere durch eine selbstfahrende oder mit einem landwirtschaftlichen Zugfahrzeug gekoppelte Feldspritze gebildet sein kann. Die landwirtschaftliche Verteilmaschine bzw. die Feldspritze umfasst ein Spritzgestänge, das wenigstens eine Spritzdüse, insbesondere mehrere Spritzdüsen zum Verteilen von Pflanzenschutz- und/oder Düngeflüssigkeit während einer Feldfahrt der Verteilmaschine bzw. Feldspritze über einen Pflanzenbestand aufweist. Weiterhin ist ein Rechnersystem vorgesehen, das zur geregelten Variation von Ausbringparametern der über die Spritzdüsen ausbringbaren Pflanzenschutz- und/oder Düngeflüssigkeit Sensorsignale wenigstens eines Überwachungsmittels zur Erfassung eines Benetzungsgrades der Pflanzen des Pflanzenbestandes mit ausgebrachtem Pflanzenschutz- und/oder Düngemittel mit Verstelleinrichtungen zur Anpassung der Ausbringparameter an vorgebbare Sollwerte für den Benetzungsgrad verknüpft.

Das wenigstens eine Überwachungsmittel ist am Spritzgestänge angeordnet, insbesondere in Fahrtrichtung nach hinten über das Spritzgestänge hinausragend. Weiterhin kann vorgesehen sein, dass das wenigstens eine Überwachungsmittel durch eine Infrarotkamera oder mehrere Infrarotkameras gebildet ist. Je nach konstruktiven und baulichen Gegebenheiten kann das wenigstens eine Überwachungsmittel am Spritzgestänge derart angebracht sein, dass dieses der wenigstens einen Spritzdüsen in Fahrtrichtung der Verteilmaschine bzw. Feldspritze nachgeordnet ist. Wahlweise kann das wenigstens eine Überwachungsmittel derart am Spritzgestänge angebracht sein, dass dieses zwischen zwei benachbarten oder entfernt voneinander angebrachten Spritzdüsen diesen in Fahrtrichtung nachgeordnet ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine Seitenansicht einer landwirtschaftlichen Verteilmaschine bzw. einer Feldspritze mit einem Spritzgestänge, das sich in einer Betriebslage für eine Feldfahrt zum Ausbringen von Pflanzenschutzmittel befindet.
Fig. 2 zeigt einen schematischen Ablaufplan des Erfindungsgemäßen Verfahrens.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

Die dargestellten Ausführungsformen stellen lediglich Beispiele dar, wie das erfindungsgemäße Verfahren bzw. die Feldspritze ausgestaltet sein kann und stellen keine abschließende Begrenzung dar.

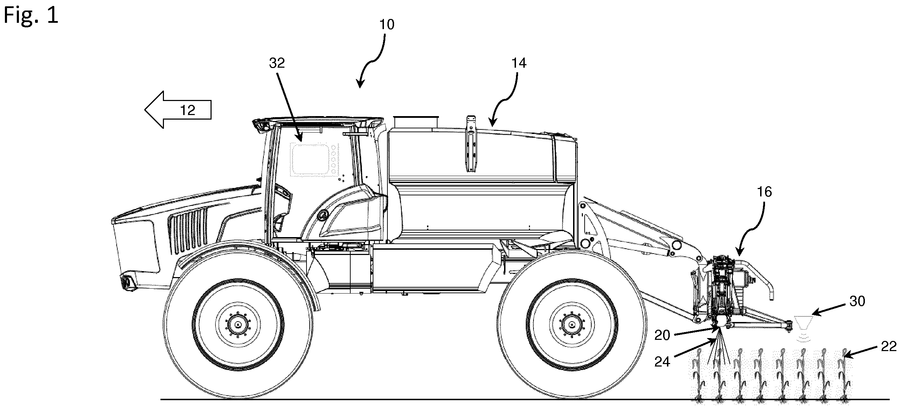

Die schematische Seitenansicht der Fig. 1 zeigt eine landwirtschaftliche Verteilmaschine in Form einer Feldspritze 10. Auf der Rückseite der Feldspritze 10 ist, in Bezug auf die Fahrtrichtung 12, ein Spritzgestänge 16 angeordnet. Die gezeigte Feldspritze 10 mit dem daran angeordneten Spritzgestänge 16 kann insbesondere in der Landwirtschaft zur flächigen und weitgehend gleichmäßigen Ausbringung von Pflanzenschutzmittel eingesetzt werden. Der Feldspritze 10 ist weiter ein Vorratsbehälter 14 zum Bereitstellen und Bevorraten der auszubringenden Pflanzenschutzflüssigkeit zugeordnet. Darüber hinaus ist diesem Vorratsbehälter 14 eine, hier nicht dargestellte Förderpumpe zugeordnet, mittels welcher die Pflanzenschutzflüssigkeit vom Vorratsbehälter 14 zu den, dem Spritzgestänge 16 zugeordneten Spritzdüsen 20 befördert wird.

Die Spritzdüsen 20 sind über die Arbeitsbreite des Spritzgestänges 16 in gleichmäßigen Abständen zueinander angebracht, wobei die Spritzdüsen 20 verschiedenste Gestaltung aufweisen können. In einer bevorzugten Ausführungsform sind mehrere Spritzdüsen 20 mit verschiedenen Eigenschaften je Position zu einem sog. Düsenstock zusammengefasst. Somit wird erreicht, dass je Position von Spritzdüsen 20 verschiedenste Eigenschaften der Spritzdüsen 20 erreicht werden können. So können Spritzdüsen 20 kombiniert werden, mit denen bspw. ein feines, nebelartiges Tropfenspektrum erzielt wird; aber auch ein grobes Tropfenspektrum ist vorstellbar. Darüber hinaus können die Spritzdüsen 20 in deren Winkel in Bezug auf eine Pflanzenoberfläche verstellt werden, um somit ebenso die Verteilung der Pflanzenschutzflüssigkeit zu verbessern bzw. zu variieren.

Die in Fig. 1 gezeigte Ausführungsform zeigt hierbei ein Spritzgestänge 16 mit angebrachten Spritzdüsen 20, bei der diese senkrecht zum Pflanzenbestand 22 ausgerichtet sind. Die Spritzdüsen 20 erzeugen ein weitestgehend gleichmäßiges Tropfenspektrum 24, das von oben gleichmäßig auf den Pflanzenbestand 22 sprüht. Aufgrund des Tropfenspektrums 24 und des anschließenden Haftenbleibens der Pflanzenschutzflüssigkeit auf dem Pflanzenbestand 22 entsteht auf diesem eine sog. Benetzung. Diese Benetzung ist entscheidend für die Wirksamkeit des Pflanzenschutzmittels.

Um die tatsächlich durch die Pflanzenschutzmaßnahme erreichte Benetzung des Pflanzenbestandes 22 zu ermitteln, ist dem Spritzgestänge 16 wenigstens ein Überwachungsmittel 30 nachgeordnet, mittels dem diese Benetzung erfasst wird. Die vom Überwachungsmittel 30 ermittelte Benetzung wird zu einem Rechnersystem 32 übermittelt. In diesem Rechnersystem 32 wird eine Istwert-Sollwert-Analyse durchgeführt, d.h. die vorher eingegebene Sollbenetzung wird mit der tatsächlichen, durch die Pflanzenschutzmaßnahme erreichten Benetzung verglichen. Anschließend werden mittels des Rechnersystems 32 die Ausbringparameter so angepasst, um die Sollbenetzung zu erreichen.

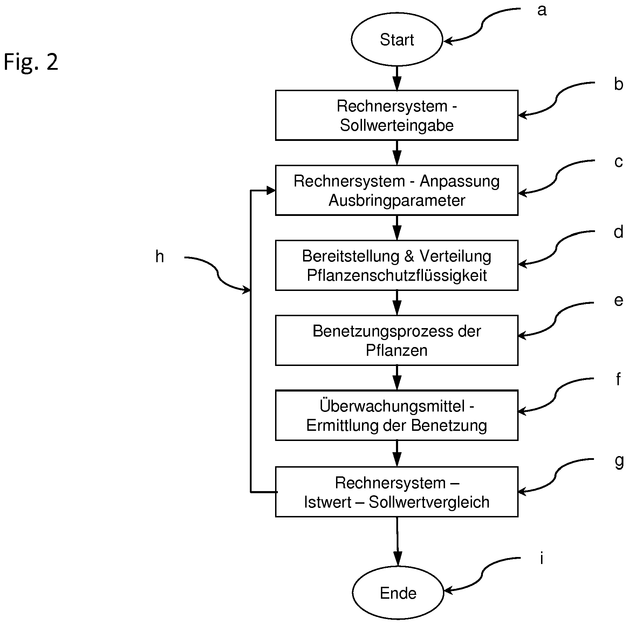

Die Fig. 2 zeigt anhand eines schematischen Ablaufplans, wie das erfindungsgemäße Verfahren vorzugsweise ablaufen kann. So wird im "Schritt a" zunächst der Pflanzenschutzprozess, bzw. die Applikation gestartet, wobei hierzu die Feldspritze 10 zunächst aus einer bspw. Transportposition in eine Arbeitsposition überführt wird und wodurch alle mit dem Ausbringprozess in Verbindung stehenden Elemente, wie Spritzdüsen 20, Vorratsbehälter 14 usw. in Arbeitsposition bzw. in Grundstellung gebracht werden.

Als nächstes folgt im "Schritt b" die Eingabe der Sollwerte des Pflanzenschutzprozesses in ein Rechnersystem 32; d.h. in das Rechnersystem 32 werden Angaben über den Pflanzenbestand bzw. über die Pflanzensorte, die auszubringende Pflanzenschutzflüssigkeit usw. eingegeben. Dies kann zum einen manuell durch einen Bediener erfolgen, aber auch automatisch durch bspw. eine Abfrage von Datenbanken, bspw. eines Pflanzenschutzmittel-Herstellers. Diese Angaben führen anschließend zu einer gewünschten Sollbenetzung, welche durch den Applikationsprozess erreicht werden soll, bzw. wie stark welche Bereiche des Pflanzenbestandes mit Pflanzenschutzmittel bedeckt oder besprüht werden sollen.

Auf Basis dieser Sollwerteingabe erfolgt als nächstes im "Schritt c" mittels des Rechnersystems 32 eine Anpassung der Ausbringparameter. Die Ausbringparameter beinhalten hierbei u. a. die Ausbringmenge, die Art der Spritzdüse, die Winkelposition der Spritzdüsen in Bezug auf den Pflanzenbestand usw.

Anschließend erfolgt im "Schritt d" die Verteilung der Pflanzenschutzflüssigkeit auf Basis der durch das Rechnersystem 32 eingestellten Parameter. Durch Anhaften der Flüssigkeit auf dem Pflanzenbestand 22 entsteht auf diesem ein Belag bzw. findet somit der Benetzungsprozess statt. Dies ist im aufgeführten Beispiel als "Schritt e" aufgeführt.

Darauf folgend wird im "Schritt f" mit Hilfe von dem wenigstens einem Überwachungsmittel 30 die tatsächlich erreichte Benetzung der Pflanzenschutzmaßnahme ermittelt. Hierzu ist dem Spritzgestänge wenigstens ein derartiges Überwachungsmittel 30 nach- bzw. zugeordnet. Das Überwachungsmittel 30 erfasst hierbei wiederum verschiedene Kriterien der Benetzung. So wird zum einen ermittelt, an welchem Bereich der Pflanze die Benetzung wie stark ausgebildet ist, und ggf. zum anderen - abhängig von der Bildauswertung - welche Pflanzen benetzt wurden, d.h. wurden die Kulturpflanzen, oder die Wildpflanzen, oder die Schädlinge auf den Pflanzen benetzt.

Anhand dieser Werte wird im "Schritt g" ein Istwert-Sollwert-Vergleich der Benetzung durchgeführt; das bedeutet, es werden die gewünschten Sollwerte der Benetzung mit der tatsächlich erreichten Benetzung der Pflanzenschutzmaßnahme und durch das Rechnersystem 32 verglichen. Auf Basis dieses Vergleichs beginnt im "Schritt h" eine Wiederholungsschleife, d.h. das Verfahren beginnt auf Basis dieser Werte wieder mit "Schritt c", d.h. es Erfolgt eine erneute Anpassung der Ausbringparameter. Diese Wiederholungsschleife findet solange statt bis der Applikationsprozess schließlich im "Schritt i" beendet wird.

Das mehrfache Durchlaufen der Wiederholungsschleife (Schritt h) macht das erfindungsgemäße Verfahren zu einem geregelten Verfahren zur Anpassung der Ausbringparameter in Abhängigkeit von gemessenen Sensorwerten, die einen Benetzungsgrad der mit Flüssigkeit beaufschlagten Pflanzen charakterisieren.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Feldspritze
- 12: Fahrtrichtung
- 14: Vorratsbehälter
- 16: Spritzgestänge
- 20: Spritzdüse, Düsenstock
- 22: Pflanzenbestand
- 24: Sprühnebel, Tropfenspektrum
- 30: Überwachungsmittel
- 32: Rechnersystem

- a: Start
- b: Sollwerteingabe
- c: Anpassung Ausbringparameter
- d: Verteilung Pflanzenschutzflüssigkeit
- e: Benetzungsprozess
- f: Überwachungsmittel
- g: Istwert - Sollwertvergleich
- h: Wiederholungsschleife
- i: Ende

## Patentansprüche

1. Verfahren zum gesteuerten Ausbringen von flüssigem Pflanzenschutz- und/oder Düngemittel mittels einer landwirtschaftlichen Verteilmaschine, insbesondere mittels einer Feldspritze (10), über ein an der Verteilmaschine bzw. der Feldspritze (10) angebrachtes Spritzgestänge (16), wobei das Pflanzenschutz- und/oder Düngemittel während einer Feldfahrt der Verteilmaschine bzw. Feldspritze (10) mittels wenigstens einer am Spritzgestänge (16) angebrachten Spritzdüse (20) über einen Pflanzenbestand (22) verteilt wird, **gekennzeichnet durch** mindestens folgende Verfahrensschritte in der nachfolgenden Reihenfolge:
a) Start des Pflanzenschutzprozesses,
b) Eingabe oder Einlesen von Sollwerten in ein Rechnersystem (32), insbesondere zur Vorgabe einer definierten Benetzung des Pflanzenbestandes (22) mit Pflanzenschutz- und/oder Düngemittel,
c) durch Vorgabe des Rechnersystems (32) gesteuerte Variation von Ausbringparametern für das Pflanzenschutz- und/oder Düngemittel unter Berücksichtigung zumindest der eingegebenen Sollwerte,
d) Verteilung des Pflanzenschutz- und/oder Düngemittels über den Pflanzenbestand (32) auf Basis der Ausbringparameter,
e) Benetzung der Pflanzen des Pflanzenbestandes (22) mit Pflanzenschutz- und/oder Düngemittel,
f) permanente, zyklische und/oder intermittierende Erfassung einer Benetzung der Pflanzen des Pflanzenbestandes (22) mit Pflanzenschutz- und /oder Düngemittel nach dem Verteilen des Pflanzenschutz- und/oder Düngemittels mittels wenigstens eines nachgeordneten Überwachungsmittels (30), welches am Spritzgestänge (16) angeordnet ist, insbesondere in Fahrtrichtung (12) nach hinten über das Spritzgestänge (16) hinausragt,
g) Vergleich der mittels des Überwachungsmittels (30) erfassten Benetzung der Pflanzen des Pflanzenbestandes (22) mit Pflanzenschutz- und/oder Düngemittel durch das Rechnersystem (32) mit der auf Basis der Sollwerteingabe berechneten vorgegebenen Benetzung,
h) permanente, zyklische und/oder intermittierende Anpassung der Ausbringparameter auf Basis einer Abweichung der erfassten Benetzung von der vorgegebenen Benetzung der Pflanzen des Pflanzenbestandes (22) mit Pflanzenschutz- und/oder Düngemittel,
i) Beendigung des Pflanzenschutzprozesses.

2. Verfahren nach Anspruch 1, bei dem das Überwachungsmittel (30) die tatsächlich erreichte Benetzung der Pflanzen des Pflanzenbestandes (22) ermittelt, wobei die vorrangig benetzten Bereiche des Pflanzenbestandes (22) und/oder der Grad der Benetzung dieser vorrangig benetzten Bereiche des Pflanzenbestandes (22) mit Pflanzenschutz- und/oder Düngemittel erfasst wird.

3. Verfahren nach Anspruch 2, bei dem das Überwachungsmittel (30) die Pflanzen des Pflanzenbestandes (22) optisch erfasst, insbesondere mittels einer Infrarotkamera.

4. Verfahren nach einem der Ansprüche 1 bis 3, bei dem die veränderlichen Ausbringparameter durch eine Ausbringmenge je Zeiteinheit und/oder durch eine Winkellage der Spritzdüsen und/oder ein von den Spritzdüsen erzeugtes Tropfenspektrum (24) und/oder durch eine von den einzelnen Spritzdüsen ausgebrachte Menge an Pflanzenschutz- und/oder Düngemittel gebildet werden.

5. Landwirtschaftliche Verteilmaschine für das Ausbringen von flüssigem Pflanzenschutz- und/oder Düngemittel, insbesondere selbstfahrende oder mit einem landwirtschaftlichen Zugfahrzeug gekoppelte Feldspritze (10), mit einem Spritzgestänge (16), das wenigstens eine Spritzdüse (20), insbesondere mehrere Spritzdüsen (20) zum Verteilen von Pflanzenschutz- und/oder Düngemittel während einer Feldfahrt der Verteilmaschine bzw. Feldspritze (10) über einen Pflanzenbestand (22) aufweist, **gekennzeichnet durch** ein Rechnersystem (32), das zur geregelten Variation von Ausbringparametern des über die Spritzdüsen (20) ausbringbaren Pflanzenschutz- und/oder Düngemittels Sensorsignale wenigstens eines nachgeordneten Überwachungsmittels (30), welches am Spritzgestänge (16) angeordnet ist, insbesondere in Fahrtrichtung (12) nach hinten über das Spritzgestänge (16) hinausragt, zur Erfassung einer Benetzung der Pflanzen des Pflanzenbestandes (22) mit ausgebrachtem Pflanzenschutz- und/oder Düngemittel mit Verstelleinrichtungen zur Anpassung der Ausbringparameter an vorgebbare Sollwerte für die Benetzung verknüpft.

6. Landwirtschaftliche Verteilmaschine bzw. Feldspritze (10) nach Anspruch 5, bei dem das wenigstens eine Überwachungsmittel (30) durch eine Infrarotkamera oder mehrere Infrarotkameras gebildet ist.

7. Landwirtschaftliche Verteilmaschine bzw. Feldspritze (10) nach Anspruch 5 oder 6, bei dem das wenigstens eine Überwachungsmittel (30) am Spritzgestänge (16) derart angebracht ist, dass dieses der wenigstens einen Spritzdüsen (20) in Fahrtrichtung (12) der Verteilmaschine bzw. Feldspritze (10) nachgeordnet ist.

8. Landwirtschaftliche Verteilmaschine bzw. Feldspritze (10) nach Anspruch 5 oder 6, bei dem das wenigstens eine Überwachungsmittel (30) am Spritzgestänge (16) derart angebracht ist, dass dieses zwischen zwei benachbarten oder entfernt voneinander angebrachten Spritzdüsen (20) diesen in Fahrtrichtung (12) nachgeordnet ist.

## Claims

1. A method for the controlled spreading of a liquid plant protection agent and/or fertiliser by means of an agricultural distribution machine, in particular by means of a field sprayer (10), by way of a spray boom (16) mounted to the distribution machine or to the field sprayer (10), as applicable, wherein the plant protection agent and/or fertiliser is distributed on a crop of plants (22) during a field drive of the distribution machine or of the field sprayer (10), as applicable, by means of at least one spray nozzle (20) that is mounted to the spray boom (16), **characterised by** at least the following method steps in the following order:
a) start of the plant protection process;
b) input or read-in of target values into a computer system (32), in particular, for the specification of a defined wetting of the crop of plants (22) with plant protection agent and/or fertiliser;
c) variation of spread parameters for the plant protection agent and/or fertiliser controlled by specification from the computer system (32) in consideration of at least the input target values;
d) distribution of the plant protection agent and/or fertiliser on the crop of plants (32) based on the spread parameters;
e) wetting of the plants of the crop (22) with plant protection agent and/or fertiliser;
f) permanent, cyclical, and/or intermittent detection, after distributing the plant protection agent and/or fertiliser, of a wetting of the plants of the crop (22) with plant protection agent and/or fertiliser by means of at least one downstream monitoring means (30), which is disposed at the spray boom (16), and, in particular, projects in driving direction (12) backwards beyond the spray boom (16);
g) comparison by the computer system (32) of the wetting of the plants of the crop (22) with plant protection agent and/or fertiliser as detected by means of the monitoring means (30) with the specified wetting as calculated based on the target value input;
h) permanent, cyclical, and/or intermittent adaptation of the spread parameters based on a deviation of the detected wetting from the specified wetting of the plants of the crop (22) with plant protection agent and/or fertiliser;
i) finalisation of the plant protection process.

2. The method according to claim 1, in which the monitoring means (30) determines the actually achieved wetting of the plants of the crop (22), wherein the preferentially wetted areas of the crop of plants (22) and/or the degree of wetting of said preferentially wetted areas of the crop of plants (22) with plant protection agent and/or fertiliser are detected.

3. The method according to claim 2, in which the monitoring means (30) detects the plants of the crop (22) optically, in particular by means of an infrared camera.

4. The method according to one of the claims 1 to 3, in which the variable spread parameters are formed by a spreading quantity per time unit and/or by an angular position of the spray nozzles and/or by a drop spectrum (24) generated by the spray nozzles and/or by a quantity of plant protection agent and/or fertiliser spread by the individual spray nozzles.

5. An agricultural distribution machine for the spreading of liquid plant protection agent and/or fertiliser, in particular a field sprayer (10) that is self-propelled or coupled with an agricultural towing vehicle, with a spray boom (16), having at least one spray nozzle (20), in particular a plurality of spray nozzles (20), for the distribution of plant protection agent and/or fertiliser on a crop of plants (22) during a field drive of the distribution machine or of the field sprayer (10), as applicable, **characterised by** a computer system (32), which, for the purpose of the regulated variation of spread parameters of the plant protection agent and/or fertiliser that is spreadable by way of the spray nozzles (20), links sensor signals from at least one downstream monitoring means (30) being disposed at the spray boom (16) and, in particular, projecting in driving direction (12) backwards beyond the spray boom (16), for the detection of a wetting of the plants of the crop (22) with spread plant protection agent and/or fertiliser, to adjustment devices for the adaptation of the spread parameters to specifiable target values for the wetting.

6. The agricultural distribution machine or field sprayer (10), as applicable, according to claim 5, in which the at least one monitoring means (30) is formed by an infrared camera or by a plurality of infrared cameras.

7. The agricultural distribution machine or field sprayer (10), as applicable, according to claim 5 or 6, in which the at least one monitoring means (30) is mounted to the spray boom (16) in such a manner that said monitoring means (30) is disposed downstream in driving direction (12) of the distribution machine or field sprayer (10), as applicable, from the at least one spray nozzle (20).

8. The agricultural distribution machine or field sprayer (10), as applicable, according to claim 5 or 6, in which the at least one monitoring means (30) is mounted to the spray boom (16) in such a manner that said monitoring means (30) is disposed between two spray nozzles (20), which are mounted adjacent to or spaced apart from one another, downstream in driving direction (12) from said spray nozzles (20).

## Revendications

1. Procédé d'épandage contrôlé de produit phytosanitaire liquide et/ou d'engrais au moyen d'un épandeur agricole, notamment au moyen d'un pulvérisateur agricole (10) via une rampe de pulvérisation (16) montée sur l'épandeur ou le pulvérisateur agricole (10), le produit phytosanitaire et/ou l'engrais étant répartis sur un peuplement végétal (22), au cours d'un passage sur le champ de l'épandeur ou du pulvérisateur agricole (10), au moyen d'au moins une buse de pulvérisation (20) montée sur la rampe de pulvérisation (16), **caractérisé par** au moins les étapes de procédé suivantes dans l'ordre suivant :
a) démarrage du processus phytosanitaire ;
b) entrée ou lecture de valeurs de consigne dans un système informatique (32), notamment pour prescrire un humectage défini du peuplement végétal (22) avec du produit phytosanitaire et/ou de l'engrais ;
c) par ordre prescrit par le système informatique (32), variation contrôlée des paramètres d'épandage pour le produit phytosanitaire et/ou l'engrais compte tenu au moins des valeurs de consigne entrées ;
d) répartition du produit phytosanitaire et/ou de l'engrais sur le peuplement végétal (22) sur la base des paramètres d'épandage ;
e) humectage des plantes du peuplement végétal (22) avec du produit phytosanitaire et/ou de l'engrais ;
f) détection permanente, cyclique et/ou intermittente d'un humectage des plantes du peuplement végétal (22) avec du produit phytosanitaire et/ou de l'engrais à la suite de la répartition dudit produit phytosanitaire et/ou engrais, à l'aide au moins d'un moyen de surveillance (30) placé en aval, agencé sur la rampe de pulvérisation (16) et qui dépasse notamment vers l'arrière, dans le sens de la marche (12), au-dessus de la rampe de pulvérisation (16) ;
g) comparaison effectuée par le système informatique (32) entre l'humectage des plantes du peuplement végétal (22) avec du produit phytosanitaire et/ou de l'engrais, détecté par le moyen de surveillance (30), et l'humectage prescrit calculé sur la base des valeurs de consigne entrées ;
h) adaptation permanente, cyclique et/ou intermittente des paramètres d'épandage sur la base d'une divergence entre l'humectage détecté et l'humectage prescrit des plantes du peuplement végétal (22) avec du produit phytosanitaire et/ou de l'engrais ;
i) fin du processus phytosanitaire.

2. Procédé selon la revendication 1, dans lequel le moyen de surveillance (30) détermine l'humectage des plantes du peuplement végétal (22) effectivement obtenu, étant donné que sont détectés les zones du peuplement végétal (22) humectées en priorité et/ou le degré d'humectage de ces zones du peuplement végétal (22) humectées en priorité avec du produit phytosanitaire et/ou de l'engrais.

3. Procédé selon la revendication 2, dans lequel le moyen de surveillance (30) détecte par voie optique les plantes du peuplement végétal (22), notamment au moyen d'une caméra infrarouge.

4. Procédé selon l'une quelconque des revendications 1 à 3, dans lequel les paramètres d'épandage variables consistent en une quantité d'épandage par unité temporelle et/ou par une position angulaire des buses de pulvérisation et/ou un éventail de gouttes (24) généré par les buses de pulvérisation et/ou par une quantité de produit phytosanitaire et/ou d'engrais épandu par chacune des buses de pulvérisation.

5. Épandeur agricole pour l'épandage de produit phytosanitaire liquide et/ou d'engrais, notamment pulvérisateur agricole (10) automoteur ou couplé à un véhicule tracteur agricole, doté d'une rampe de pulvérisation (16) qui présente au moins une buse de pulvérisation (20), notamment plusieurs buses de pulvérisation (20) pour répartir du produit phytosanitaire et/ou de l'engrais sur un peuplement végétal (22) au cours d'un passage sur le champ de l'épandeur ou du pulvérisateur agricole (10), **caractérisé par** un système informatique (32) qui, pour la variation régulée de paramètres d'épandage du produit phytosanitaire et/ou de l'engrais susceptibles d'être épandus via les buses de pulvérisation (20), relie des signaux de capteurs émis par au moins un moyen de surveillance (30) placé en aval, agencé sur la rampe de pulvérisation (16) et qui dépasse vers l'arrière, dans le sens de la marche (12), au-dessus de la rampe de pulvérisation (16) pour détecter un humectage des plantes du peuplement végétal (22) avec du produit phytosanitaire et/ou de l'engrais épandu, à des dispositifs de réglage pour adapter les paramètres d'épandage à des valeurs de consigne susceptibles d'être prescrites pour l'humectage.

6. Épandeur agricole ou pulvérisateur agricole (10) selon la revendication 5, dans lequel ledit au moins un moyen de surveillance (30) consiste en une caméra infrarouge ou en plusieurs caméras infrarouge.

7. Épandeur agricole ou pulvérisateur agricole (10) selon la revendication 5 ou 6, dans lequel ledit au moins un moyen de surveillance (30) est monté sur la rampe de pulvérisation (16) de telle sorte qu'il est placé, dans le sens de la marche (12) de ladite machine ou dudit pulvérisateur agricole (10), en aval de ladite au moins une buse de pulvérisation (20).

8. Épandeur agricole ou pulvérisateur agricole (10) selon la revendication 5 ou 6, dans lequel ledit au moins un moyen de surveillance (30) est monté sur la rampe de pulvérisation (16) de telle sorte qu'il est disposé, entre deux buses de pulvérisation (20) voisines ou distantes l'une de l'autre, en aval de celles-ci dans le sens de la marche (12).
